(19) Europäisches Patentamt
European Patent Office
Office européen des brevets

(11) **EP 3 399 859 B1**

(12) **EUROPEAN PATENT SPECIFICATION**

(45) Date of publication and mention
of the grant of the patent:
**14.02.2024 Bulletin 2024/07**

(21) Application number: **17736179.7**

(22) Date of filing: **06.01.2017**

(51) International Patent Classification (IPC):
**A01K 61/80** (2017.01)

(52) Cooperative Patent Classification (CPC):
**A01K 61/80; A01K 61/10;** Y02A 40/81

(86) International application number:
**PCT/NO2017/050004**

(87) International publication number:
**WO 2017/119821 (13.07.2017 Gazette 2017/28)**

(54) **METHOD FOR CALCULATING AMOUNT OF FEED AS FUNCTION OF TIME IN A FISH CAGE, FOR SUBSEQUENT FEEDING DAY**

VERFAHREN ZUR BERECHNUNG DER FUTTERMENGE ALS ZEITFUNKTION IN EINEN FISCHKÄFIG FÜR DEN FOLGENDEN FUTTERTAG

PROCÉDÉ DE CALCUL DE LA QUANTITÉ DE NOURRITURE EN FONCTION DU TEMPS DANS UNE CAGE À POISSONS, POUR UN JOUR DE NOURRISSAGE ULTÉRIEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.01.2016 NO 20160021**

(43) Date of publication of application:
**14.11.2018 Bulletin 2018/46**

(73) Proprietor: **Myhre, Vidar**
**7046 Trondheim (NO)**

(72) Inventor: **Myhre, Vidar**
**7046 Trondheim (NO)**

(74) Representative: **Acapo AS**
**Edvard Griegs vei 1**
**5059 Bergen (NO)**

(56) References cited:
**WO-A1-2011/145944      WO-A2-00/03586**
**CN-A- 101 731 172      CN-A- 105 052 805**
**US-A1- 2012 055 412      US-B1- 6 443 098**

**Description**

**Field of invention**

The present invention regards a method for calculating in a computer integrated with an automated feeding installation the amount of feed as a function of time in a fish cage, for subsequent feeding day.

**Background**

In a central feeding installation for feeding of fish in a fish cage, feed that is stored in silos is conveyed down into a dosage arrangement for regulation of the amount of feed to be carried to the fish cage. Allotted feed is conveyed further on into a pipeline and gets blown out by air over each fish cage. The installation is controlled by one or two operators, who may start, stop and perform regulation of the amount of feed related to the requirements of the fish. The fish cages are monitored e.g. to observe the behavior of the fish, the feed course and the appetite of the fish. This may be carried out by surface observation or by camera.

Feeding normally takes place by two different methods. One of these methods is called meal feed with which the fish is fed with one or two meals during a day. The other method is called continuous feed with which the fish is fed continuous with small amounts throughout the whole day of feeding. The amount of feed is chosen from feed tables. Feed tables are recommended amounts of feed for a given date (time of year), sea temperature and size of the fish. Nevertheless, one rarely feed exactly the amount of feed that the table indicates, one take a look at the table, evaluate the fish has been eating daily during the last period and make plans thereafter. Most people feed until the fish is satisfied.

The task of the operators is mainly to arrange for all fish cages to get satisfied with the least possible spill of feed by monitoring the behavior of the fish and adjust the amount of feed according to experienced appetite. This is what gives the highest growing rate and the lowest consumption of feed.

Previously, quota regulations on using salmon feed in fish cages was used in Norway. Each installation was allocated a quota that one attempted to utilize as best they could. As a result of this careful use of feed was common, and a large proportion of the fishes being hungry at the end of the day. The utilization of feed was often good (low feed factor), while the growth rate was not optimal.

Around the year 2004, the quota regulations in Norway was invalidated resulting in the feeding getting more offensive. This feeding practice resulted in a dramatically increased production, while the feed factor increased considerably. During previous practice during the quota regulation, one ensured the best growth by under feeding a little, without regulation, one ensure the best growth by hitting optimal feeding $R_{max}$ as best possible, even if this results in a little feed loss on the days that one does not hit well.

During a day of feeding, it may last from 08 o'clock until 15, there are long periods during which nothing happens and a short period during which very much is happening.

Due to the fact that little is happening during the first part of the day, the monitoring gets less frequent. For the operator, one day is the same as another day and may be experienced as dull. The operator consequently may miss situations that occur during which overfeeding happens and feedstock gets wasted.

The last part of the day much is happening, and the fish then eats less per time unit. During such periods one must undertake regulation of the amount of feed in order to avoid feedstock getting wasted. If 6 - 7 fish cages in a fish farm are in the end term, the feeding will get terminated somewhat too early in some fish cages and a little too late in others.

Generally, the appetite is good in the morning, but sometimes the appetite will be bad early in the day and recover during the day. In such cases the feeding may be terminated early in the day because the fish is assumed to be satisfied. The fish then loses the possibility to eat later that day when it actually is hungry.

A challenge when allotting feed in fish cages are of course that fish get hungry at different times of day during a day of feeding. For example, a group of fish get hungry at the start of the day of feeding, while others may get hungry in the middle of a day of feeding. Further other do not get hungry until after the day of feeding has ended, and may experience negative growth (consuming of bodily reserves) until the next day of feeding. As discussed introductorily, this may result in under feeding as well as overfeeding and not the least non optimal growth rate.

From prior art is emphasized WO 0003586 regarding an electronic processor system for fish farms. Further emphasized is WO 2011145944 regarding a system for controlling feeding of farmed fish in a sea cage by measurement of changes in dissolved oxygen in a feeding area.

Also emphasized is GB 2335835 regarding a device for feeding of fish in fish farms and aquariums. Further is emphasized CA 2099241 regarding a feeding device for delivery of feedstock to e.g. fish farms at certain time intervals. Lastly is emphasized GARCIA M. ET AL.: "Monitoring and control sensor system for fish feeding in marine fish farms", IET Commun., vol. 5, no. 12, 2011, pages 1682 - 1690, regarding a method for feeding based on measuring the behavior of the fish in a fish farm and using the measurement results to predict if the fish is hungry or satisfied.

**Purpose**

One purpose with the invention is to present a method for calculating the amount of feed for one or more fish cages containing fish in fish farms. A better basis for the calculation (when and how much it ate yesterday) and a clearer risk picture, will result in lower feed factor and higher growth rate compared with prior art methods.

**The invention**

These and other purposes are achieved with a method according to the characterizing part of patent claim 1. Further advantageous features will appear from the dependent claims.

A first aspect of the invention regards a method for calculation in a computer integrated with an automated feeding installation of the amount of feed as a function of time in a fish cage for the following day of feeding (d), according to independent claim 1, which comprises the steps of:

  a) choosing a number (n) of time intervals (t) within a first day of feeding (d-1),
  b) choosing an estimated amount of feed ($E_{d-1}(t)$) for each time interval (t) for the first day of feeding (d-1),
  c) feeding the fish the first day of feeding (d-1) and register the actual amount of feed ($F_{d-1}(t)$) within each time interval (t) for the first day of feeding, and
  d) calculating the estimated amount of feed for each time interval (t) for a second day of feeding (d) from actual amount of feed ($F_{d-1}(t)$) in the same time interval (t) on the first day of feeding (d-1),

e) repeating steps b) to d) ahead of estimating the amount of feed ($E_{di}(t)$) within each time interval (t) for each successive day number (i), but where step b) uses the actual amount of feed ($F_{d(i-1)}(t)$) for each time interval (t) of the preceding day of feeding (d(i-1)), **characterized in** that the method further comprises the steps of:

- f) choosing an average turnaround time (OT) for the fish cage, defined as the duration from the fish having a full digestion system until an empty digestion system,
- g) choosing a trigger point interval in the form of a time interval during which fish is expected to get hungry, dividing the trigger point interval into plural time intervals and specifying a probability (S(t)) for a part of the fishes that are expected to get hungry within each time interval within the trigger point interval, whereby step d) includes the step of the estimated amount of feed for a first time interval ($E_d(t)$) is calculated according to formula (1):

$$E_d(t) = (F_{d-1}(t) / FT_{d-1}) * TAB_d * (OT / 24) * S(t) \qquad (1),$$

in which

  (d) is day number (> 1), (t) = a chosen time interval within one day of feeding,
  ($FT_{d-1}$) is the total amount of feed given on previous day (d-1), $TAB_d$ is an instructive total amount of feed for day (d), (OT) is turnaround time or time from full digestion system to empty digestion system,
  the number 24 is the number of hours per a day and a night, and
  S(t) is a factor (value 0..1) for the probable portion of fishes getting hungry in this time interval,
  h) calculating estimated amount of food for a second time interval ($E_d(t+1)$) according to the formula (2):

$$E_d(t+1) = (F_{d-1}(t) / FT_{d-1}) * TAB_d * (OT / 24) * S(t+1) +$$

$$(F_{d-1}(t+1) / FT_{d-1}) * TAB_d * (OT / 24) * S(t) \qquad (2)$$

in which the symbols are as given above, and
  i) to continue calculation and summing up as in stage h) up to and including last time interval (n).

In one embodiment an interval for an expected total amount of feed is calculated, this interval being defined as a lower total amount of feed ($P(i_L)$) having an $i_L$ % probability for fish starting to eat more than the given lower amount of feed, an upper total amount of feed ($P(i_H)$) having an $i_H$ % probability for fish is going to eat less than the given upper amount of feed, optionally one or more values in between for total amount of feed ($P(i_N)$) having an $i_N$ % probability that fish are going to eat more or less than a given amount, whereby the values for total amount of feed $P(i_L)$, $P(i_H)$, $P(i_N)$ with declared probability are calculated from standard deviation of difference between actual and estimated amount of feed from a chosen number of previous days, whereby the calculated total feed amount interval is used during feeding for registering when the accumulated amount of actual amount of feed for a given day is included in the feed amount interval and traverses this, for in this way being able to intensify the surveillance of the fish cage when actual amount of feed starts to approach the expected total amount of feed and in this way avoid overfeeding.

In one embodiment, the duration for each time interval (t) is chosen from 1 minute to 3 hours, preferably about 1 hour.

In another embodiment, generally equal mutual duration is chosen for all time intervals (t).

In yet another embodiment, an interval i calculated for an expected total consumption of feed is calculated, this interval is defined as a lower total amount of feed $P(i_L)$ with $i_L$ % probability for fish starting to eat more than the indicated lower total amount of feed, an upper total amount of feed $P(i_H)$ with $i_H$ % probability for fish is going to eat less than the indicated upper total amount of feed, optionally one or more intermediate values of total amount of feed $P(i_N)$ with $i_N$ % probability for fish is going to eat more or less than the indicated value, whereby the values for total amount of feed $P(i_L)$, $P(i_H)$, $P(i_N)$ with indicated probability calculated from standard deviation of difference between actual TH and expected TH, actual standard deviation for TH and expected TH, and actual TAB and expected TAB from a selected number of previous days propagated to one probability expression, whereby the calculated total feed amount interval is used during feeding for registering when the accumulated actual amount of feed for a given day enters the feed amount interval and transverses this, for in this way making possible intensifying the monitoring of the fish cage when the actual amount of feed starts to approach the expected total amount of feed and in this way avoid overfeeding.

Also disclosed, but not according to the invention, is a method for calculating the amount of feed as a function of time in a fish cage, for the subsequent day of feeding (d), comprising the steps of

> a) choosing a number (n) of time intervals (t) within a first day of feeding (d-1),
> b) choosing an expected amount of feed ($x_{d-1}(t)$) for each time interval (t) for the first day of feeding (d-1),
> c) feeding the fish the first day of feeding (d-1) and registering the actual amount of feed ($y_{d-1}(t)$) within each time interval (t) for the first day of feeding, and
> d) calculating the expected amount of feed for each time interval (t) for a second day of feeding (d) from actual amount of feed ($y_{d-i}(t)$) during the same time interval (t) on the first day of feeding (d-1),
>
> e) repeating steps b) to d) above for estimating the amount of feed ($y_{d(i)}(t)$) within each time interval (t) for each following day number (i), but during which step b) utilizes expected amount of feed ($F_{d(i-1)}(t)$) for each time interval (t) at the previous day of feeding (d(i-1)),
> characterized by the method further comprises the steps of:
>
> - f) choosing an average speed of circulation (TH) for the fish cage, defined as the duration from the fish being full until it gets hungry again,
> - g) choosing a standard deviation for TH in the form of a time interval in which fish is expected to get hungry, dividing the interval in a plurality of time intervals and present probability (Sd(t)) for portion of fishes expected to get hungry within each time interval, whereby step d) includes the step of the estimated amount of feed for a first time interval ($x_d(t)$) being calculated in relation to formula (1):

$$x_d(t) = (y_{d-1}(t) \, / \, Y_{d-1(tE)}) * (TAB_d(TH \, / \, 24) * Sd(t)) \hspace{2cm} (1),$$

> in which
>
> (d) is day number (> 1), (t) = a chosen time interval within one day of feeding, ($Y_{d-1(tE)}$) is the actual amount of feed given on the previous day (d-1) at the end of day of feeding (tE),
> $TAB_d$ is an instructive total amount of feed for day (d), (TH) is turnaround time or time from the fish being satisfied until it is hungry again,
> the number 24 is the number of hours per a day and a night, and
> S(t) is a factor (value 0..1) for the probable portion of fishes getting hungry in this time interval,
> h) calculating estimated amount of food for a second time interval ($E_d(t+1)$) according to the formula (2):

$$x_d(t+1) = (y_{d-1}(t) \, / \, Y_{d-1(tE)}) * TAB_d * (TH \, / \, 24) * S(t) +$$

$$(Y_{d-1}(t+1) \, / \, Y_{d-1(tE)}) * TAB_d * (TH \, / \, 24) * Sd(t-1) \hspace{1.5cm} (2)$$

in which the symbols are as given above, and
i) to continue calculation and summing up as in stage h) up to and including the last time interval (n).

In one embodiment, the duration for each time interval (t) is chosen from 1 minute to 3 hours, preferably about 1 hour.

In another embodiment, generally equal mutual duration is chosen for all time intervals (t).

In yet another embodiment, an interval is calculated for an expected amount of feed, this interval being defined as a lower total amount of feed ($P(i_L)$) with $i_L$ % probability for fish starting to eat more than the indicated lower total amount of feed, an upper total amount of feed ($P(i_H)$) with $i_H$ % probability for fish going to eat less than the indicated upper total amount of feed, optionally one or more intermediate values of total amount of feed ($P(i_N)$) with $i_N$ % probability for fish going to eat more or less than the indicated value, whereby the values for total amount of feed ($P(i_L)$), ($P(i_H)$), ($P(i_N)$) with indicated probability calculated from standard deviation of difference between actual TH and expected TH, actual standard deviation for TH and expected TH, and actual TAB and expected TAB from a selected number of previous days propagated to one probability expression, whereby the calculated total feed amount interval is used during feeding for registering when the accumulated actual amount of feed for a given day enters the feed amount interval and transverses this, for in this way making possible intensifying the monitoring of the fish cage when the actual amount of feed starts to approach the expected total amount of feed and in this way avoid overfeeding.

## Definitions

By "feed factor" is meant the ratio of the amount of feed supplied to the fish cage to the growth of fish mass. A low feed factor represents a good utilization of the feed where a large part of the feed is supplied to feed the fish while little gets wasted.

By "digestion system" is meant stomach and accompanying intestinal system.

By "speed of circulation" as used here is meant the time that it takes from the fish has eaten and is satisfied (full digestion system) until the digestion system is empty. The speed of circulation for feed in the digestion organs of the fish varies primarily with temperature and secondary with type of feed. A discussion on the effect of temperature and size of fish is found in the scientific article of Sigurd O. Handeland, Albert K. Imsland, Sigurd O. Stefansson, Sigurd O. Handeland, Albert K. Imsland og Sigurd O. Stefansson "The effect of temperature and fish size on growth, feed intake, food conversion efficiency and stomach evacuation rate of Atlantic salmon postsmolts".

By "trigger point" is meant the time at which the fish gets hungry and takes food to a condition where the fish is satisfied (full digestion system). The trigger point is not exact and varies with different factors.

By "trigger point interval" as used here is meant the time period during which the trigger point is expected to occur. The trigger point is as mentioned not exact and is encumbered with uncertainty. In the following description is used a trigger point interval of 7 hours, but it may just as well be shorter or longer, such as 4 hours, 5 hours, 6 hours or 8 hours. Within the trigger point interval, there will be a distribution of entry of an actual trigger point. The probability of the trigger point occurring is at its lowest in the beginning and in the end of the trigger point interval, while the probability is at its highest around the middle of the trigger point interval.

By "feed waste" is meant feed that has sunk through the fish quantity in a fish cage without getting eaten.

## The invention in general

According to the invention, the amount of feed is calculated from when the fish ate last time. More specifically a prognosis for the total amount of feed for today, and how the need for feed develops during the day of feeding, calculated from when and how much the fish ate last day. When starting up the method of feeding according to the invention, one may at day 1 start the feeding in the fish farm according to a feeding table for the actual latitude, current sea temperature, the kind of species and size of the fish. By the end of the day of feeding on day 1, data regarding how much feed the fish actually ate within each time interval is gathered. These experience values are then used to estimate the amount of feed for the following day of feeding, including amount of feed within the chosen time intervals. After the following day of feeding has ended, the experience values are gathered in the same way as on the first day of feeding, and this is used as input values for calculating the amount of feed in total and the amount of feed per time period for day number 3. After such an iterative approach of a plurality of days, e.g. 10 days, sufficient information is collected regarding expected amount of feed as a function of time and one is capable of calculating real and approximately optimal amounts of feed resulting in the lowest possible waste of feed and a best possible growth rate for the fish in the fish farm.

An amount of feed being eaten during a time interval corresponds to a number of fish that have eaten themselves satisfied within the same interval. The probability of when these fishes get hungry again is calculated from the speed of digestion. This varies primarily with temperature and is decisive for how long time it takes until the level of filling sinks to an assumed trigger level for hunger. Since both the digestion speed and the trigger level for hunger comprise uncertainty, the result of the calculation is presented as probability within a time interval.

The time intervals within one day of feeding are not exact and may be chosen from experience and desired degree of accuracy. The time intervals are generally equal in length. Decision regarding amount of feed on day one for use in estimation of amount of estimated amount of feed on day two may be chosen from experience and assessment, but preferably a recommended value from a feeding table is chosen.

In a preferred embodiment, a calculation of a deviation between an estimated amount of feed versus an actual amount of feed is performed within each day of feeding, whereby these deviations may give information regarding how well the prognosis was hitting and possible need for adjustments of the variables. The variables will be the circulation speed (T), recommended amount of feed (feeding table) and the use of uncertainty. In a fish farm, there may be found that some fish cages consume more or less than other fish cages in relation to a feeding table. For such fish cages it will be feasible to choose alternative feeding tables in the estimation of e.g. 5 % more (or less) feed.

The decision of actual amount of feed in the respective time intervals during a day of feeding is coming from an automated feeding installation, e.g. by visual inspection of feeding data or by programmatic and electronic integration with computer programs in same.

The invention may also include a step of calculating an interval for the lowest and highest probable total amount of feed from a standard deviation between estimated and actual amount of feed during a number of days, e.g. the last 10 or 14 days. These numbers may be subject to further statistical analysis for deciding normal distribution of deviation in estimated amounts of feed over time and using this information to determine an interval for lowest and highest expected total amount of feed for a certain day.

The operator may use this information to decide whether the fish has received so much food that it risks getting satisfied by continued feeding. According to the invention, this is defined as a P-value for which P1 indicates that the amount of feed with which there is a 1 % probability that the fish is satisfied, or 99 % probability that fish will eat more than the amount of feed at P1. Further on, a P99-value will indicate that there is a 99 % probability that the fish is satisfied, or with other words that there is 1 % probability that the fish will eat more than the total amount of feed at P99. In the middle of these, we have a P50 that indicates that with that total amount of feed during that day, there is a 50 % probability for fish to eat more or less than the indicated total amount.

As an example, let us say that on day 10, it is calculated a P1-value of 80 kg feed and a P99-value of 140 kg feed. The operator is attentive during feeding, but does not need to perform further attention for accumulated actual amount of feed that is given that day before it passes the P1-value. When the accumulated amount of feed enters the interval between P1 and P99, it is probable that the fish at one point in time or another gets satisfied, and consequently the operator must attend more carefully and observe and judge the appetite of the fish in order to avoid overfeeding.

It is important to be aware of the method here concerns farming of large amounts of fish, so that statistical methods may be used. Thus this does not necessarily concern measuring and farming of single fish, because natural variations and the health of single fish will affect the behavior of single fish.

Further on, it is important with the present method that it may be sufficient with observations of fish letting feed pass instead of hunting for it. This makes it sufficient with a qualitative observation. In other words, there is no need for quantitative measurements like e.g. the amount of feed passing or the number of fish eating the feed. Feeding situations may be explained with a model where fish is divided in groups: one upper group eating, one further down queuing, one lowest group with sick and injured fish. As fish get satisfied, they go down to a layer below fish queuing and leave their place to those queuing, until the queue is empty and in the end, all fish are satisfied. When there are no more in queue and the number of engaged fish reduces, the feed will sink deeper because fewer fish use longer time to eat all the feed, and the amount must be reduced in order to avoid waste of feed. When the upper part is empty, feed will in practice be wasted, and the feeding must be terminated. This constitutes consequently an objective and qualitative stop signal.

**Detailed description**

The invention is in the following described in closed detail through examples of embodiments with referenced to drawings where,

Fig. 1 is a schematic presentation of the appetite during a day of feeding without feed,

Fig. 2 is a presentation as in Fig. 1, but here the fish is fed evenly during a day of feeding,

Fig. 3 is a presentation as in Figs. 1 and 2, but here the feeding is terminated before the day of feeding is terminated due to visual inspection by the operator,

In a first aspect of the invention, a prerequisite is that the point of trigger for hunger is the point in time when the digestion system gets empty (TE).

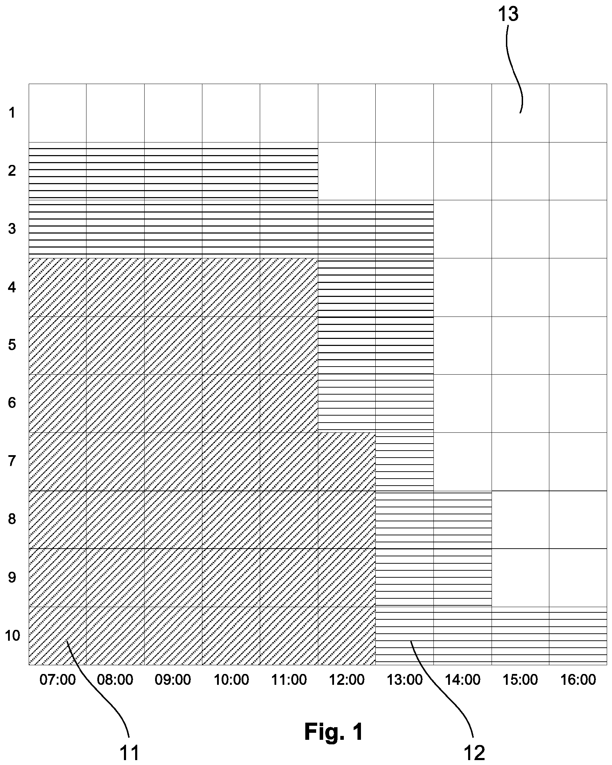

Fig. 1 is a schematic presentation showing the portion of fishes with different satisfaction categories throughout the course of a day. The horizontal axis designates the axis of time during a day of feed from 7 until 16 o'clock. The vertical axis numbered from 1 to 10 shows 10 groups of fish, each group comprising an equal number of fish, such as 1, 10 or 50. Fig. 1 illustrates the course of a day without feeding.

At 7 o'clock, 10 % of the fish had emptied the digestion system and got hungry, represented by one cell without hatching having a reference number 13. This group of fish prey on their reserves and have a negative growth, which is not desirable. At 16, this number increased to 90 %.

Back again to 7 o'clock, 20 % of the fish were hungry, but still had food in their digestion system (reference number 12) and 10 % were hungry without food in their digestion system. The groups 12 and 13 of hungry fish increased to 100 % at 13 o'clock, of which 20 % were without food in the digestion system. The remaining 70 % of the fish were satisfied at 7 o'clock (reference number 11). At 13 o'clock, the portion of satisfied fishes was reduced to 0 %. Consequently the portion of satisfied fishes has gone over to the group 12, being hungry but with food in their digestion system or to the group of hungry fish 13 without food in the digestion system. Similarly, fish in the group of hungry fish, but with food in their digestion system have gone over to the group of hungry fish, so that 100 % of the fish were hungry at 13 o'clock (reference number 13). At 16 o'clock, all were hungry, but 10 % did not have an empty digestion system.

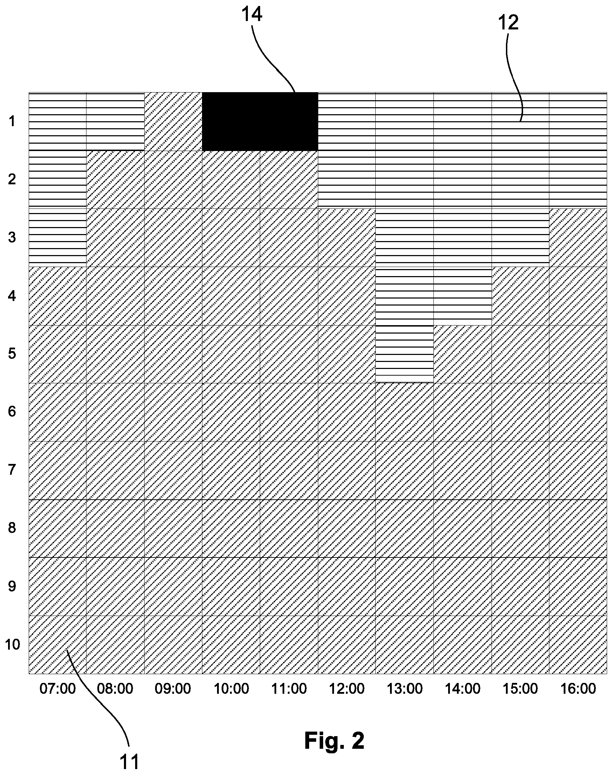

Fig. 2 is a drawing similar to Fig. 1, but here the fish is fed evenly in the course of the day of feeding from 7 until 16 o'clock. While 30 % of the fish is hungry but with food in the digestion system at 7 o'clock, 100 % of the fish were satisfied at 9 o'clock.

With continuing feeding, 10 % are overfed in the in the time frame 10 - 12. Further on, the number of hungry fish will increase from the middle of the day and past the afternoon and it will get difficult to make all the fishes satisfied before the day of feeding has ended. Consequently, we here have a feeding regime with overfeeding and under feeding on the same day. The total amount of feed supplied during the course of the day is in a sense correct, but the result is nevertheless not optimal. Feeding is dynamic and varies from day to day.

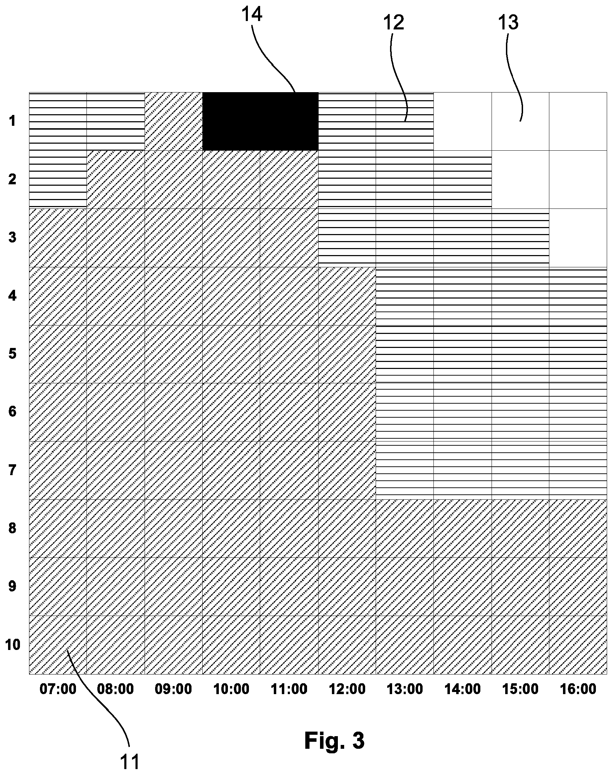

Fig. 3 is a drawing similar to Figs. 2 and 3 and shows a dynamic feeding regime during which the operator observes the farming cage and regulates the amount of feed if the fish on one side is experienced as being hungry, or on the other side, satisfied. At 7 o'clock, 80 % of the fish are satisfied and 20 % hungry, but with food in the digestion system. The cage is supplied feed until 10 - 11 o'clock where the operator undertakes an observation, seeing that the fish is satisfied (feed gets wasted) and terminates the feeding. The operator interprets consequently that the cage is satisfied. As a result, the portion of the fishes being hungry but with food in the digestion system 12 from 0 % at 12 o'clock to 40 % at 16 o'clock. At the end of the day of feeding, 30 % of the fish is hungry with an empty digestion system and just 30 30 % are completely satisfied. The feeding regime illustrated in Fig. 3 therefore to a great degree gives to a large extent reduced growth until the next day.

Figs. 1 to 3 before are just intended as principle examples of feeding regimes and the illustrated numbers must consequently just be interpreted as examples.

When calculating the amount of feed for a given time interval of day number 2, the method according to the invention uses information regarding the actual fed amount during the same time interval from day number 1, e.g. in the time frame 07 - 08. When starting up the method, a starting point is a suitable feeding table. The feeding table suggests an instructive amount of feed during the day of feeding. Actual fed amount, instructive amount from the feeding table, estimated turnaround time (for example 25 hours) to be adjusted against the probability for how much fish is going to get hungry in this time frame. This gives an estimated amount of food to be given to the fish during this time frame on day number 2.

Table 1 below shows an example of a trigger interval of 8 hours and percent probability of how mush fish arrive at the trigger point in the different time intervals.

**Table 1**

| Portion of fish expected to get hungry in a given time interval. | |
|---|---|
| Time no. | Persentage porsion of hungry fish (%) |
| 1 | 5 |
| 2 | 10 |
| 3 | 15 |
| 4 | 20 |
| 5 | 20 |
| 6 | 15 |

(continued)

| Portion of fish expected to get hungry in a given time interval. | |
|---|---|
| Time no. | Persentage porsion of hungry fish (%) |
| 7 | 10 |
| 8 | 5 |

Table 2 below shows actual amount of feed given during day 1. The amounts in the respective time intervals are typically collected from the feeding system.

**Table 2**

| Actual amount of feed day 1 | |
|---|---|
| Period of Time | Actual allocated amount of feed (kg) |
| 08-09 | 150 |
| 09-10 | 300 |
| 10-11 | 200 |
| 11-12 | 210 |
| 12-13 | 200 |
| 13-14 | 100 |
| 14-15 | 80 |
| | |
| Total | 1240 |

The next step is then to estimate the amount of feed to be given to the fish on day 2.

In order to estimate this, a starting point is the actual amount of feed that actually was given the fish in a time interval, e.g. in the time interval 09 - 09. This value is evaluated with recommended amount of feed from the feeding table and the time of flow for the fish and the probable portion of fishes that reach the trigger point within this time frame. Estimated amount of feed in a given time interval for the following day may be calculated according to the formula 1 below:

$$E_d(t) = (F_{d-1}(t) / FT_{d-1}) * TAB_d * (OT / 24) * S(t) \qquad (1)$$

In which:

d is day number (>1),
T = a chosen time interval within a day of feeding, e.g. 1 hour from 08 - 09,
E is an estimated amount of feed on day d in a given time interval t,
F is actual amount of feed given on the previous day d -1 in chosen time interval t,
FT is total amount of feed given during the previous day d - 1,
TAB is a recommended total amount of feed for the chosen day (date), e.g. from a feeding table,
OT is turnaround time or time from a full digestion system until empty digestion system,
the number 24 is the number of hours per a day and a night, and S(t) is a factor (value 0..1) for the probable portion of fishes getting hungry in this time interval as in the example in table 1.

Estimated amount of feed for the time period t = 08 - 09 for day d = 2, $E_d{=}_2(t{=}08{-}09)$ may be calculated as follows. As we see from table 2, actual amount of feed in this time period 150 kg. From table 1, we observe that it is 5 % probability that all fish will get hungry in this time period, and the feed table (not shown) suggests 820 kg for this date, while the total amount of feed given on day 1 was 1240 kg.

$$E_{d=2}(t=08\text{-}09) = (150\ kg/1240\ kg) * 820\ kg * (35\ hours/24\ hours) * 0.05 = 7.2\ kg$$

Estimated amount of feed for the first hour on feeding day 1 then is 7.2 kg.

To calculate the amount of feed for the following period 09 - 10 we calculate expected amount of feed for fish eating in the time period 08 - 09 adjusted with the probability factor $S(t)$ in table 1, indicating the part of the fishes eating normally in the time space 08 - 09 and that are expected to arrive the trigger point in the time period 09 - 10 is 10 %, or a factor $S(t+1) = 0.1$. This amount is added to the estimated amount feed for fish eating in the time period 09 - 10 adjusted with the probability factor $S(t)$:

$$E_d(t+1) = (F_{d-1}(t)\ /\ FT_{d-1}) * TAB_d * (OT\ /\ 24) * S(t+1) +$$

$$(F_{d-1}(t+1)\ /\ FT_{d-1}) * TAB_d * (OT\ /\ 24) * S(t) \qquad (2)$$

According to the example values in tables 1 and 2 in addition to the rest of the parameters as indicated above, the estimated amount of feed for the time period 09 - 10 for day 1:

$$E_{d=2}(t=09\text{-}10) = (150/1240) * 820 * (35/24) * 0.10 +$$

$$(300/1240) * 820 * (35/24) * 0.05$$

$$= 14 + 14 = 28\ kg.$$

Total estimated amount of feed for the time period 09 - 10 for day 1 consequently is 28 kg. A similar calculation for the time period 10 - 11 $(t+2)$:

$$E_d(t+2) = (F_{d-1}(t)\ /\ FT_{d-1}) * TAB_d * (OT\ /\ 24) * S(t+2) +$$

$$(F_{d-1}(t+1)\ /\ FT_{d-1}) * TAB_d * (OT\ /\ 24) * S(t+1) +$$

$$(F_{d-1}(t+2)\ /\ FT_{d-1}) * TAB_d * (OT\ /\ 24) * S(t) \qquad (3)$$

With the numbers from tables 1 and 2 and the factors before, the amount of feed for the time period 10 - 11 for day 1 may be calculated according to the above equation 3 as follows:

$$E_{d=2}(t=10\text{-}11) = (150/1240) * 820 * (35/24) * 0.15 +$$

$$(300/1240) * 820 * (35/24) * 0.10$$

$$(200/1240) * 820 * (35/24) * 0.05$$

$$= 22 + 29 + 9 = 60\ kg.$$

Total estimated amount of food for the time period 10 - 11 for day 1 then is about 60 kg. The calculations continuous similarly for the remaining periods until the end of day 2 of feeding. The exemplary values are summarized in table 3 below.

**Table 3**

| Actual amount of feed day 1 and estimated amount of feed day 2 | | |
|---|---|---|
| Period of Time | Actual amount of feed day 1 (kg) | Estimated amount of feed day 2 (kg) |
| 08-09 | 150 | 7,2 |
| 09-10 | 300 | 29 |
| 10-11 | 200 | 60 |
| 11-12 | 210 | 102 |
| 12-13 | 200 | 146 |
| 13-14 | 100 | 173 |
| 14-15 | 80 | 179 |
| | | |
| **Total** | **1240** | **696** |

Total estimated amount of feed for day number 2 is 696 kg for trigger intervals falling within the feed period (8 o'clock - 15 o'clock). This calculation is performed also for trigger intervals falling outside the feeding period: i.e. that fish eating 08 - 09 being estimated to having a trigger interval of 8 hours will have a period at the end of the day, 15 - 16, falling outside the feeding period from 08 - 15. Analogous, fish eating 09 - 10 will have two periods falling outside of the day of feeding: 15 - 17 etc. Fish eating 14 - 15 will have a longer trigger interval 15 -16 falling outside the feeding period 08 - 15.

The calculation of estimated amount of feed in the timeframe 15 - 16 falling outside the feeding period 08 - 15 may be performed according to formula 1 above:

$$E_d(t) = (F_{d-1}(t) / FT_{d-1}) * TAB_d * (OT / 24) * S(t) \qquad (1)$$

With the values from tables 1 and 2 in addition to the parameters given before, the calculated amount of feed for the timeframe 15 - 16 is calculated as follows:

$$E_{d=2}(t=15-16) = (150 \text{ kg}/1240 \text{ kg}) * 820 \text{ kg} * (35/24) * 0.05 = 7.2 \text{ kg}$$

Among the fish that ate day 1, just 1 time group is estimated having trigger intervals overlapping the time frame 21 - 22: the group that ate the previous day during the time frame 14 - 15. Analogous to the calculation of estimated amount of feed during the feeding period 08 - 15 before, an estimation and summation of the rest of the groups back to the group that ate during the time frame 08 - 09 in which the end of the trigger interval of the group coincides with the time frame 15 - 16 which falls outside the period of feeding. The values are summed up in table 4 below.

**Table 4**

| Estimated amount of feed day 2 falling outside the feeding period 08-16 | | | | |
|---|---|---|---|---|
| Feeding period dag 1 | Actual amount of feed day 1 (kg) | Estimated amount of feed day 2 within feeding period (kg) | Trigger interval falling outside feeding period | Estimated amount of feed day 2 outside feeding period (kg) |
| 08-09 | 150 | 7,2 | 15-16 | 166 |
| 09-10 | 300 | 29 | 16-17 | 134 |
| 10-11 | 200 | 60 | 17-18 | 94 |
| 11-12 | 210 | 102 | 18-19 | 59 |
| 12-13 | 200 | 146 | 19-20 | 31 |
| 13-14 | 100 | 173 | 20-21 | 13 |

(continued)

| Estimated amount of feed day 2 falling outside the feeding period 08-16 | | | | |
|---|---|---|---|---|
| Feeding period dag 1 | Actual amount of feed day 1 (kg) | Estimated amount of feed day 2 within feeding period (kg) | Trigger interval falling outside feeding period | Estimated amount of feed day 2 outside feeding period (kg) |
| 14-15 | 80 | 179 | 21-22 | 4 |
| | | | | |
| Total | 1240 | 696 | | 500 |

Total amount of estimated amount of feed for day 2 is the sum of amounts within and outside the feeding period: 696 + 500 = 1196. The real amount for day 1 was 1240. The amount of feed falling outside the period of fee is considered to be stomach residue, so that the estimated amount gets 696 kg. The reason for the requirement for food falling outside the period of feeding is caused by the fish getting hungry after that the feed is available due to this fish still having some amount of feed in the digestion system. This rest in the digestion system ("stomack residue") will correspond to the requirement for feed after that the food is available and is regarded as part of the total amount of required feed. This number is somewhat lower than the recommended amount 820 kg from the table of feeding. As can be seen in the table 4 above, the feeding on day 2 should start carefully and be increased heavily at the end of the day - see column 3 stating estimated amount of feed on day 2 within the feeding period.

On day 2 the feeding is carried out with an eye to the estimated values calculated from the day before. The operator nevertheless makes observations on the way and undertakes adjustments of the estimated amount of feed based upon the appetite of the fish. This is exemplified in table 5 below. Table 5 collocate actual and estimated values from day 1 to ease the comprehension.

**Table 5**

| Actual amount of feed days 1 og 2 versus estimat for day 2 | | | |
|---|---|---|---|
| Time period | Actual amount of feed day 1 (kg) | Estimated amount of feed day 2 (kg) | Actual amount of feed day 2 (kg) |
| 08-09 | 150 | 7,2 | 9 |
| 09-10 | 300 | 29 | 35 |
| 10-11 | 200 | 60 | 50 |
| 11-12 | 210 | 102 | 90 |
| 12-13 | 200 | 146 | 150 |
| 13-14 | 100 | 173 | 180 |
| 14-15 | 80 | 179 | 179 |
| | | | |
| Total | 1240 | 696 | 693 |

As is seen from the table, the total amount of feed of 693 kg close to the estimated value of 696 kg.

The actual amounts of feed given during the respective time intervals of the feeding period of day 2 are now used as input values for a similar calculation as described above with starting point in the feeding table for estimation of amount of feed on day 1. The calculation will not be repeated here and reference is made to the above description. The estimated values for day 3 are summed up in the table 6 below.

**Table 6**

| Actual amount of feed days 1 og 2 og estimated amount of feed day 3 | | | | |
|---|---|---|---|---|
| Time period | Actual amount of feed day 1 (kg) | Estimated amount of feed day 2 (kg) | Actual amount of feed day 2 (kg) | Estimated amount of feed day 3 (kg) |
| 08-09 | 150 | 7,2 | 9 | 501 |

(continued)

| Actual amount of feed days 1 og 2 og estimated amount of feed day 3 | | | | |
|---|---|---|---|---|
| Time period | Actual amount of feed day 1 (kg) | Estimated amount of feed day 2 (kg) | Actual amount of feed day 2 (kg) | Estimated amount of feed day 3 (kg) |
| 09-10 | 300 | 29 | 35 | 5 |
| 10-11 | 200 | 60 | 50 | 13 |
| 11-12 | 210 | 102 | 90 | 29 |
| 12-13 | 200 | 146 | 150 | 58 |
| 13-14 | 100 | 173 | 180 | 99 |
| 14-15 | 80 | 179 | 179 | 148 |
| | | | | |
| Total | 1240 | 696 | 693 | 853 |

As may be seen from table 6, large amounts of hungry fish at the start of the day of feeding and estimated amount of feed during the first feeding interval on day 3 (08 - 09 o'clock) is very high. Accordingly feeding must be very heavy early in the day, but throughout the day, the operator must be observant, since the appetite is expected to fall for then again to increase towards the end of the day (see table 6). The total estimated amount of feed for day 3 is 853 kg vs. the estimated 696 kg and the actual 693 kg on day 2. This represents large variations compared to instructive amounts related to the feeding table (820 kg for day 2 and 840 kg for day 3).

The feeding is carried out on day 3 with reference to the estimate calculated from the day before (table 6), and the actual amounts of feed during the respective time intervals are registered and are used to calculate the estimate for day number 4 etc.

Experience data that are collected from estimated and actual amounts of feed over time in addition to observations carried out by the operator may be used to improve the other parameters, such as speed of circulation, trigger point and trigger point interval.

According to an aspect which does not form part of the invention, one uses a starting point hunger behavior for fish before the digestion system gets empty (TE), this point in time is referenced (TH). The expression for speed of circulation is then TH and not OT or TE.

Where the original basic formula is:

$$E_d(t) = (F_{d-1}(t) \, / \, FT_{d-1}) * TAB_d * (OT \, / \, 24) * S(t)$$

instead is used:

$$x_d(t) = (y_{d-1}(t) \, / \, Y_{d-1}(tE)) * (TAB_d * (TH \, / \, 24) * S(t))$$

Explanation of reference signs:

$t$      Point in time /time interval in the feeding interval. $t$ is an integer running typically from 1 to 8, but may optionally be used for time of day, e.g. 7, 8, 9, ... if the feeding starts at 7 o'clock in the morning.

$t_B$      First point in time or time interval in the feeding period.

$t_E$      Last point in time or time interval in the feeding period. Assuming that $t_E$ is fixed, even if there may exist arguments for feeding longer than the planned feeding period.

$d$      Day of feeding, $d$ may run from 1 to 365, but $d$ may be used as a date, e.g. for look-up in feeding tables. The notation $d$-1 then implies the day before $d$.

$x_d(t)$      Feed requirement to be expected to arrive at time interval $t$, day $d$. $x_d(t)$ is a decision variable, and the aim is to optimize $x_d(t)$ overfeeding day $d$.

$x_d(t)$      Accumulated requirement for food to be expected to arrive up to and including time interval $t$, day $d$.

$y_d(t)$     Actual amount of feed given at time interval $t$, day $d$. $y_d(t)$ may deviate from $x_d(t)$ from observations that the feeding operator carries out through the feeding day.

$Y_d(t)$     Accumulated actual amount of feed up and including time interval $t$, day $d$.

$T_E$     Turnaround time, i.e. the time from the fish has eaten till satisfied until the stomach is completely empty of food. $T_E$ varies between the fish. $T_E$ is mentioned because in the literature, mainly $T_E$ is presented with information. $T_E$ is not practically usable in the present method.

$T_H$     The time of rotation from the fish has eaten until it is again hungry and wants to call on the feeding area. It is assumed that the fish eats more or less satisfied and then is going to leave the feeding area until it again gets so hungry that it again want to eat. $T_H < T_E$. $T_H$ also varies among fish and from one day to the next. $T_H$ is a point in time relative to a point in time when the fish ate latest. $T_H$ is connected with a trigger point which is an absolute indication of time, i.e. the time when the fish ate latest plus the time period $T_H$.

$S_d(t)$     The part of the fishes *getting* hungry during the feeding interval $t$, day $d$. Note that $S_d(t)$ is not known by the feeding operator, and therefore is observed as a random value. By a fish being hungry is understood that the point of time $T_H$ for this fish having passed. That the fish gets hungry at a point of time t implies that the trigger point for this actual fish falls within the interval $t$. It is expected a certain regularity for $S_d(t)$ from day to day.

$TAB_d$     Suggested total day ration from the feeding tables for day $d$.

## Advantages with the invention

The invention has plural advantages. Firstly, one may calculate approximate amount of feed for the following day of feeding and the development in required amount of feed during the day of feeding. As a result, the consumption of feed will generally be optimized (reduced cost) and a higher growth rate is achieved and consequently increased production. These two factors are key factors regarding the economy of the fish farms.

Further on, the requirement for the number of observations will be greatly reduced because the present method identifies the time periods during which the probability for nothing to happen is very low. This makes the task more interesting and the operators get more motivated. The operator will in addition obtain experience by comparing calculated amount of feed and actual amount of feed over time. This gives insight and will raise the quality of future estimations.

Another advantage with the present method is that the feeding may be planned so that the feeding may be terminated at different points of time. This is labor saving and makes possible for an operator to monitor more fish cages.

Yet another advantage with the present invention is detection of fish disease. Since the probability of under feeding and overfeeding is considerably reduced, observed lack of appetite in a fish cage may be an indication of disease, parasite attack or reduced water quality.

Another advantage with the invention is a better control of over feeding and growth rate for fish related to delousing. Ahead of delousing, the fish is starved in order to avoid stressing the fish when digesting food. This starvation in addition to the delousing process result in lost growth. The present invention may shorten this period of starving because of the better control of the satiety degree.

## Modifications

The invention is not limited to salmon farming and the method may be used equally well on other species such as cod.

While in the above examples one day of feeding from 08-15 (7 hours) is used, the invention is not limited to this. The method may equally well be used with a feeding period of 4 hours or of 10 hours, or when meal fed, conducting meals for one fish cage e.g. 2 times, each 1 hour daily. Further in the examples, there are used time intervals of 1 hour within one period of feeding. This is just an example and the invention may equally well be applied to shorter as well as longer time intervals, such as 1 minute, 30 minutes, 1.5 hours or 2 hours.

The method may be used for continuous feeding and for meal feeding, during continuous feeding, the fish are fed with small doses throughout the whole of the feeding day that may have a duration extending over the whole of the period when there is daylight. For meal feeding, the fish are fed just during short periods with large doses, and typical for this is 1 - 3 meals having a duration of 1 hour per meal evenly distributed over the chosen period.

## Claims

1. Method for calculation in a computer integrated with an automated feeding installation of the amount of feed as a function of time in a fish cage for the following day of feeding (d), comprising the steps of:

    a) choosing a number (n) of time intervals (t) within a first day of feeding (d-1),

b) choosing an estimated amount of feed ($E_{d-1}(t)$) for each time interval (t) for the first day of feeding (d-1),

c) feeding the fish the first day of feeding (d-1) and register the actual amount of feed ($F_{d-1}(t)$) within each time interval (t) for the first day of feeding, and

d) calculating the estimated amount of feed for each time interval (t) for a second day of feeding (d) from actual amount of feed ($F_{d-1}(t)$) in the same time interval (t) on the first day of feeding (d-1),

e) repeating steps b) to d) ahead of estimating the amount of feed ($E_{di}(t)$) within each time interval (t) for each successive day number (i), but where step b) uses the actual amount of feed ($F_{d(i-1)}(t)$) for each time interval (t) of the preceding day of feeding (d(i-1)),

**characterized in that** the method further comprises the steps of:

- f) choosing an average turnaround time (OT) for the fish cage, defined as the duration from the fish having a full digestion system until an empty digestion system,

- g) choosing a trigger point interval in the form of a time interval during which fish is expected to get hungry, dividing the trigger point interval into plural time intervals and specifying a probability (S(t)) for a part of the fishes that are expected to get hungry within each time interval within the trigger point interval, whereby step d) includes the step of the estimated amount of feed for a first time interval ($E_d(t)$) is calculated according to formula (1):

$$E_d(t) = (F_{d-1}(t) / FT_{d-1}) * TAB_d * (OT / 24) * S(t) \qquad (1),$$

in which

(d) is day number (> 1), (t) = a chosen time interval within one day of feeding,

($FT_{d-1}$) is the total amount of feed given on previous day (d-1), $TAB_d$ is an instructive total amount of feed for day (d),

(OT) is turnaround time or time from full digestion system to empty digestion system, the number 24 is the number of hours per a day and a night, and

S(t) is a factor (value 0..1) for the probable portion of fishes getting hungry in this time interval,

h) calculating estimated amount of food for a second time interval ($E_d(t+1)$) according to the formula (2):

$$E_d(t+1) = (F_{d-1}(t) / FT_{d-1}) * TAB_d * (OT / 24) * S(t+1) +$$

$$(F_{d-1}(t+1) / FT_{d-1}) * TAB_d * (OT / 24) * S(t) \qquad (2)$$

in which the symbols are as given above, and

i) to continue calculation and summing up as in stage h) up to and including last time interval (n).

2. Method according to claim 1, **characterized in** choosing duration for each time interval (t) from 1 minute until 3 hours, particularly about 1 hour.

3. Method according to claim 1 or 2, **characterized in** choosing generally equal mutual duration for all time intervals (t).

4. Method according to one of claims 1 to 3, **characterized in** calculating an interval for an expected total amount of feed, this interval being defined as

a lower total amount of feed ($P(i_L)$) having an $i_L$ % probability for fish starting to eat more than the given lower amount of feed,

an upper total amount of feed ($P(i_H)$) having an $i_H$ % probability for fish is going to eat less than the given upper amount of feed,

optionally one or more values in between for total amount of feed ($P(i_N)$) having an $i_N$ % probability that fish are going to eat more or less than a given amount, whereby the values for total amount of feed $P(i_L)$, $P(i_H)$, $P(i_N)$ with declared probability are calculated from standard deviation of difference between actual and estimated amount of feed from a chosen number of previous days, whereby the calculated total feed amount interval is used during feeding for registering when the accumulated amount of actual amount of feed for a given day is included in the feed amount interval and traverses this, for in this way being able to intensify the surveillance of the fish cage when actual amount of feed starts to approach the expected total amount of feed and in this way avoid overfeeding.

**Patentansprüche**

1. Verfahren zur Berechnung der Futtermenge als Funktion der Zeit in einem Fischkäfig für den folgenden Fütterungstag (d) in einem Computer, der in eine automatisierte Fütterungsanlage integriert ist, umfassend die folgenden Schritte:

   a) Wählen einer Anzahl (n) von Zeitintervallen (t) innerhalb eines ersten Fütterungstages (d-1),
   b) Wählen einer geschätzten Futtermenge ($E_{d-1}(t)$) für jedes Zeitintervall (t) für den ersten Fütterungstag (d-1),
   c) Füttern der Fische am ersten Fütterungstag (d-1) und Registrieren der tatsächlichen Futtermenge ($F_{d-1}(t)$) innerhalb jedes Zeitintervalls (t) für den ersten Fütterungstag, und
   d) Berechnen der geschätzten Futtermenge für jedes Zeitintervall (t) für einen zweiten Fütterungstag (d) aus der tatsächlichen Futtermenge ($F_{d-1}(t)$) in dem gleichen Zeitintervall (t) am ersten Fütterungstag (d-1),
   e) Wiederholen der Schritte b) bis d) vor dem Schätzen der Futtermenge ($E_{di}(t)$) innerhalb jedes Zeitintervalls (t) für jede aufeinanderfolgende Tageszahl (i), wobei jedoch Schritt b) die tatsächliche Futtermenge ($F_{d(i-1)}(t)$) für jedes Zeitintervall (t) des vorhergehenden Fütterungstages (d(i-1)) verwendet,
   **dadurch gekennzeichnet, dass** das Verfahren ferner die folgenden Schritte umfasst:

   - f) Wählen einer durchschnittlichen Durchlaufzeit (OT) für den Fischkäfig, die als die Dauer von dem Fisch mit einem vollem Verdauungssystem bis zu einem leeren Verdauungssystem definiert ist,
   - g) Wählen eines Auslösepunktintervalls in Form eines Zeitintervalls, während dem erwartet wird, dass Fische hungrig werden, Teilen des Auslösepunktintervalls in mehrere Zeitintervalle und Spezifizieren einer Wahrscheinlichkeit (S(t))für einen Teil der Fische, von denen erwartet wird, dass sie hungrig werden, innerhalb jedes Zeitintervalls innerhalb des Auslösepunktintervalls, wobei Schritt d) den Schritt der geschätzten Futtermenge für ein erstes Zeitintervall ($E_d(t)$) umfasst, das gemäß Formel (1) berechnet wird:

   $$E_d(t) = (F_{d-1}(t) \,/\, FT_{d-1}) \,*\, TAB_d \,*\, (OT \,/\, 24) \,*\, S(t) \quad (1),$$

   in der

   (d) die Tagesnummer (> 1) ist, (t) = ein gewähltes Zeitintervall innerhalb eines Tages der Fütterung, ($FT_{d-1}$) die Gesamtmenge an Futter, die am Vortag (d-1) verabreicht wurde, ist,
   $TAB_d$ eine instruktive Gesamtmenge an Futter für Tag (d) ist, (OT) die Durchlaufzeit oder Zeit von dem vollen Verdauungssystem zu dem leeren Verdauungssystem ist,
   die Zahl 24 die Anzahl der Stunden pro Tag und Nacht ist, und
   S(t) ein Faktor (Wert 0..1) für den wahrscheinlichen Anteil der Fische ist, der in diesem Zeitintervall hungrig wird, h) Berechnen der geschätzten Futtermenge für ein zweites Zeitintervall ($E_d(t+1)$) nach Formel (2):

   $$E_d(t+1) = (F_{d-1}(t) \,/\, FT_{d-1}) \,*\, TAB_d \,*\, (OT \,/\, 24) \,*\, S(t+1)$$
   $$+ (F_{d-1}(t+1) \,/\, FT_{d-1}) \,*\, TAB_d \,*\, (OT \,/24) \,*\, S(t) \quad (2)$$

   wobei die Symbole wie oben gegeben sind, und
   i) Fortsetzen der Berechnung und Summierung wie in Stufe h) bis zu dem und einschließlich des letzten Zeitintervalls (n).

2. Verfahren nach Anspruch 1, **dadurch gekennzeichnet, dass** die Dauer für jedes Zeitintervall (t) von 1 Minute bis 3 Stunden, insbesondere etwa 1 Stunde, gewählt wird.

3. Verfahren nach Anspruch 1 oder 2, **dadurch gekennzeichnet, dass** für alle Zeitintervalle (t) im Allgemeinen die gleiche gegenseitige Dauer gewählt wird.

4. Verfahren nach einem der Ansprüche 1 bis 3, **gekennzeichnet durch** Berechnen eines Intervalls für eine erwartete Gesamtmenge an Futter, wobei dieses Intervall definiert ist als

eine niedrigere Gesamtfuttermenge (P(i$_L$)), die eine i$_L$ %-ige Wahrscheinlichkeit aufweist, dass Fische anfangen, mehr als die gegebene niedrigere Futtermenge fressen,

eine obere Gesamtfuttermenge (P(i$_H$)), die eine i$_H$ %-ige Wahrscheinlichkeit aufweist, dass Fische weniger als die gegebene obere Futtermenge fressen,

optional ein oder mehrere Werte dazwischen für die Gesamtfuttermenge (P(i$_N$)), die eine i$_N$ %-ige Wahrscheinlichkeit aufweisen, dass Fische mehr oder weniger als eine bestimmte Menge fressen werden, wobei die Werte für die Gesamtfuttermenge P(i$_L$), P(i$_H$), P(i$_N$) mit deklarierter Wahrscheinlichkeit aus der Standardabweichung der Differenz zwischen tatsächlicher und geschätzter Futtermenge aus einer gewählten Anzahl vorheriger Tage berechnet werden, wobei das berechnete Gesamtfuttermengenintervall während des Fütterns zum Registrieren verwendet wird, wenn die kumulierte Menge der tatsächlichen Futtermenge für einen bestimmten Tag in das Futtermengenintervall einbezogen wird und dieses durchläuft, um auf diese Weise in der Lage zu sein, die Überwachung des Fischkäfigs zu intensivieren, wenn sich die tatsächliche Futtermenge der erwarteten Gesamtfuttermenge anzunähern beginnt, und auf diese Weise ein Überfüttern zu vermeiden.

## Revendications

1. Procédé de calcul dans un ordinateur intégré à une installation d'alimentation automatisée de la quantité de nourriture en fonction du temps dans un parc à poissons pour le jour suivant l'alimentation (j), comprenant les étapes de :

a) choix d'un nombre (n) d'intervalles de temps (t) au cours d'un premier jour d'alimentation (j-1),

b) choix d'une quantité estimée de nourriture (E$_{j-1}$(t)) pour chaque intervalle de temps (t) pour le premier jour d'alimentation (j-1),

c) alimentation des poissons le premier jour d'alimentation (j-1) et enregistrement de la quantité réelle de nourriture (F$_{j-1}$(t)) dans chaque intervalle de temps (t) pour le premier jour d'alimentation, et

d) calcul de la quantité estimée de nourriture pour chaque intervalle de temps (t) pour un second jour d'alimentation (d) à partir de la quantité réelle de nourriture (F$_{j-1}$(t)) dans le même intervalle de temps (t) au premier jour d'alimentation (j-1),

e) répétition des étapes b) à d) avant d'estimer la quantité de nourriture (E$_{ji}$(t)) dans chaque intervalle de temps (t) pour chaque numéro du jour successif (i), mais où l'étape b) utilise la quantité réelle de nourriture (F$_{j(i-1)}$(t)) pour chaque intervalle de temps (t) du jour d'alimentation (j(i-1)) précédent,

**caractérisé en ce que** le procédé comprend en outre les étapes de :

- f) choix d'un temps de rotation moyen (OT) pour le parc à poissons, défini comme la durée allant du poisson présentant un système digestif plein jusqu'à un système digestif vide,

- g) choix d'un intervalle seuil de déclenchement sous la forme d'un intervalle de temps pendant lequel les poissons devraient avoir faim, division de l'intervalle seuil de déclenchement en plusieurs intervalles de temps et spécification d'une probabilité (S(t)) pour une partie des poissons qui devraient avoir faim dans chaque intervalle de temps dans l'intervalle seuil de déclenchement, selon lequel l'étape d) inclut l'étape de la quantité estimée de nourriture pour un premier intervalle de temps (E$_j$(t)) est calculée selon la formule (1) :

$$\text{E}_\text{j}\text{(t)} \;=\; \text{(F}_\text{j-1}\text{(t)} \;/\; \text{FT}_\text{j-1}\text{)} \;*\; \text{TAB}_\text{j} \;*\; \text{(OT} \;/\; \text{24)} \;*\; \text{S(t)} \quad \text{(1)},$$

dans laquelle

(d) est le numéro du jour (> 1), (t) = un intervalle de temps choisi dans la journée suivant l'alimentation, (FT$_{j-1}$) est la quantité totale de nourriture donnée le jour précédent (j-1),

TAB$_j$ est une quantité totale précise de nourriture pour le jour (j), (OT) est le temps de rotation ou le temps entre le système digestif plein et le système digestif vide,

le nombre 24 est le nombre d'heures pour un jour et une nuit, et

S(t) est un facteur (valeur 0..1) de la proportion probable de poissons commençant à avoir faim dans cet intervalle de temps,

h) calcul de la quantité estimée de nourriture pour un second intervalle de temps (E$_j$(t+1)) selon la formule (2) :

$$E_j(t+1) = (F_{j-1}(t) / FT_{j-1}) * TAB_j * (OT / 24) * S(t+1)$$
$$+ (F_{j-1}(t+1) / FT_{j-1}) * TAB_j * (OT /24) * S(t) \quad (2)$$

dans laquelle les symboles sont tels qu'indiqués ci-dessus, et
i) poursuite du calcul et addition, comme à l'étape h) jusqu'au dernier intervalle de temps (n) inclus.

2. Procédé selon la revendication 1, **caractérisé par** le choix de la durée pour chaque intervalle de temps (t) de 1 minute à 3 heures, en particulier environ 1 heure.

3. Procédé selon la revendication 1 ou 2, **caractérisé par** le choix d'une durée mutuelle généralement égale pour tous les intervalles de temps (t).

4. Procédé selon l'une des revendications 1 à 3, **caractérisé par** le calcul d'un intervalle pour une quantité totale attendue de nourriture, cet intervalle étant défini comme une quantité totale inférieure de nourriture ($P(i_L)$) présentant $i_L$ % de probabilité que les poissons commencent à manger plus que la quantité inférieure donnée de nourriture, une quantité totale supérieure de nourriture ($P(i_H)$) présentant $i_H$ % de probabilité que les poissons mangent moins que la quantité supérieure donnée de nourriture, éventuellement une ou plusieurs valeurs intermédiaires pour la quantité totale de nourriture ($P(i_N)$) présentant $i_N$ % de probabilité que les poissons mangent plus ou moins qu'une quantité donnée, selon lequel les valeurs pour la quantité totale de nourriture $P(i_L)$, $P(i_H)$, $P(i_N)$ avec une probabilité déclarée sont calculées à partir de l'écart type de la différence entre les quantités réelle et estimée de nourriture à partir d'un nombre choisi de jours précédents, selon lequel l'intervalle de quantité totale de nourriture calculée est utilisé pendant l'alimentation pour enregistrer le moment où la quantité accumulée de quantité réelle de nourriture pour un jour donné est incluse dans l'intervalle de quantité de nourriture et le traverse, pour ainsi pouvoir intensifier la surveillance du parc à poissons lorsque la quantité réelle de nourriture commence à s'approcher de la quantité totale attendue de nourriture et ainsi éviter la suralimentation.

**Fig. 1**

**Fig. 2**

**Fig. 3**

# EP 3 399 859 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0003586 A
- WO 2011145944 A

- GB 2335835 A

### Non-patent literature cited in the description

- **GARCIA M. et al.** Monitoring and control sensor system for fish feeding in marine fish farms. *IET Commun,* 2011, vol. 5 (12), 1682-1690